# EUROPEAN PATENT APPLICATION

(11) **EP 0 989 020 A2**
(43) Date of publication of application: **29.03.2000**
(21) Application number: 99118637.0
(22) Date of filing: 21.09.1999
(51) Int. Cl.: B60N 2/46

(54) **Vehicle seat armrest**

(30) Priority: 22.09.1998 IT TO980805
(71) Applicant: GESTIND-M.B." MANIFATTURA DI BRUZOLO" S.P.A, I-10050 Bruzolo (Torino) (IT)
(72) Inventor: Bronzino, Lucas, 10050 Villar Focchiardo (IT); Pelissero, Gianpiero, 10050 Meana Di Susa (IT)
(74) Representative: Jorio, Paolo

(57) **Abstract**

A vehicle seat armrest (1) having an elongated body which rotates, on a transverse pin fitted in stationary manner to a vehicle seat, between a lowered position and a raised position. A manually controlled device (14, 18, 19) provides for step adjusting the tilt of the armrest (1) about the lowered position.

## Description

The present invention relates to a vehicle seat armrest of the type comprising an elongated body having a supporting structure defined at one end by a transverse, substantially tubular portion mounted for rotation on a transverse pin, at least one end of which is fitted in stationary manner to a vehicle seat, so that the armrest is movable angularly, about said transverse pin, between a lowered and a raised position.

A vehicle seat armrest of the type defined above is generally known, for example, from European Patent EP-B-607758 filed by the present Applicant.

In the lowered position of the armrest, which corresponds to the work position, the body normally extends horizontally, whereas, in the raised position, the body extends upwards substantially vertically or parallel to the backrest of the seat.

Currently known armrests of the type defined above can only be lowered into one predetermined position, which, in actual use, may pose problems as regards adapting the armrest to the configuration of the seat and to user requirements.

It is an object of the present invention to provide a vehicle seat armrest designed to solve the above problem in a straightforward, low-cost manner.

According to the invention, the above object is achieved by the armrest also comprising a manually controlled device for step adjusting the tilt of the armrest about said lowered position.

The manually controlled device conveniently comprises a toothed jack fitted to the supporting structure of the armrest and movable between a lock position and a release position; a toothed sector on said transverse pin; thrust means for normally retaining said jack in said lock position to engage said toothed sector; and actuating means for moving said jack from the lock position to the release position in opposition to the action of said thrust means.

The actuating means preferably comprise a push button on the opposite end of the armrest body to said substantially tubular portion; and a flexible-cable transmission connecting said push-button to said jack.

A non-limiting embodiment of the invention will be described purely by way of example with reference to the accompanying drawings, in which:
Figure 1 shows a schematic side view of a vehicle seat armrest in two limit positions;
Figure 2 shows a larger-scale longitudinal section of the armrest in the lowered position;
Figure 3 shows the same view as in Figure 2, of the armrest in the raised position;
Figure 4 shows a cross section along line IV-IV in Figure 2.

Number 1 in the accompanying drawings indicates as a whole a vehicle seat armrest defined briefly by an elongated body having a supporting structure 2, which is normally made of molded plastic material and formed close to one end of armrest 1 with a transverse, substantially tubular portion 3. Transverse tubular portion 3 is formed internally with a first stop section 4, a second stop section 5, and a longitudinal opening 6 close to second stop section 5.

Tubular portion 3 is mounted for rotation on a transverse pin 7 conveniently defined by a strong core 8 and by an outer cover portion 9 shaped to form a first longitudinal locating surface 10 and a second longitudinal locating surface 11. Close to first locating surface 10, cover portion 9 is also formed with a toothed cylindrical sector 12.

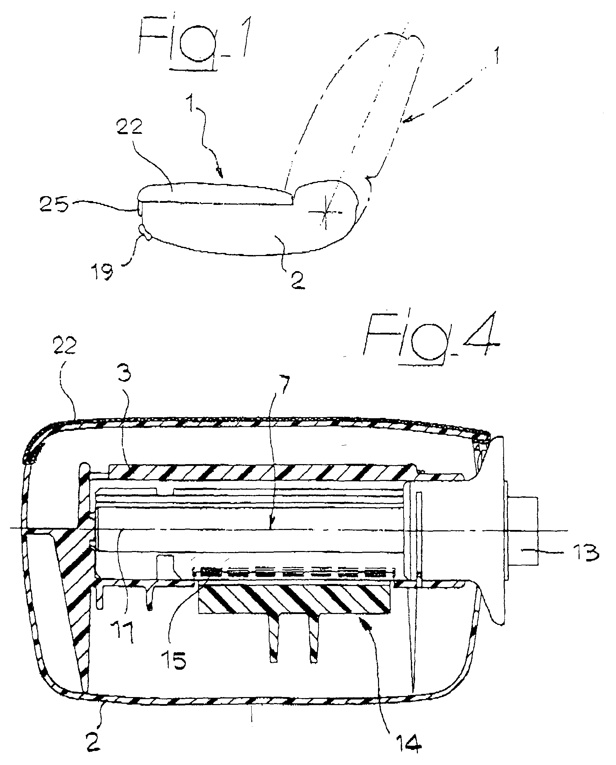

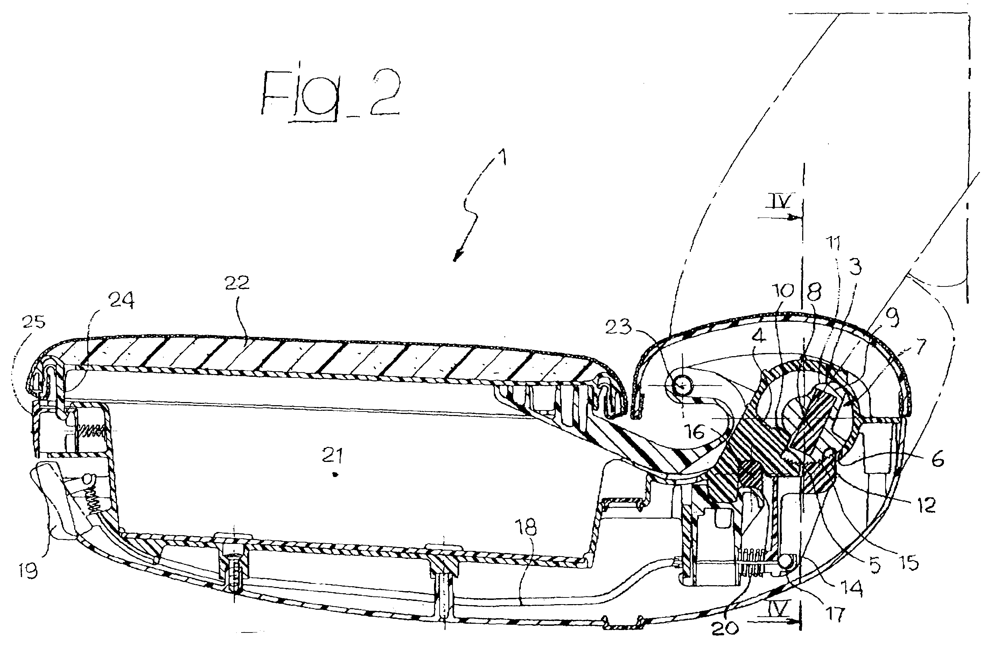

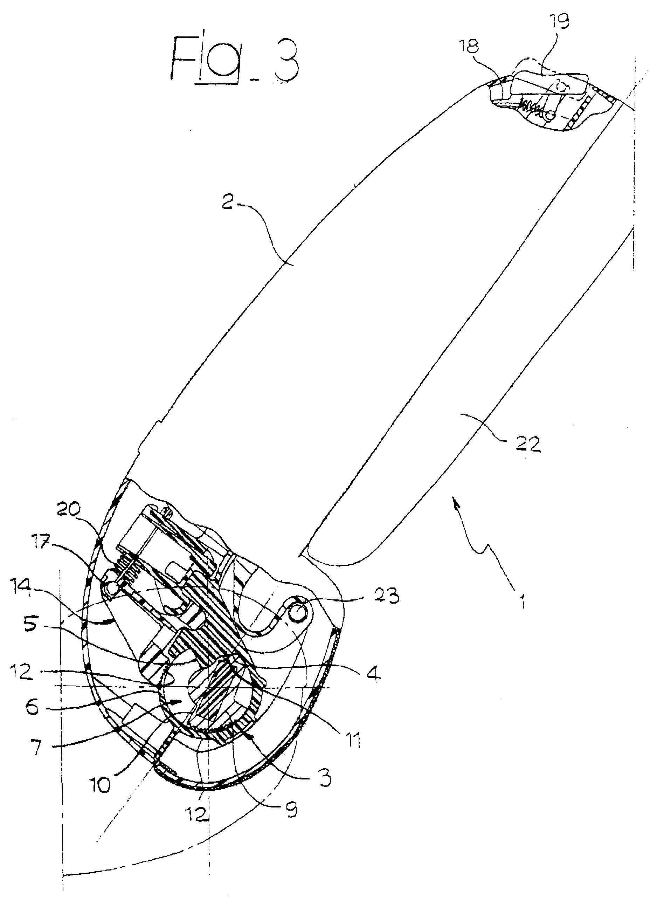

As shown in Figure 4, transverse pin 7 has one end 13 projecting from one side of armrest 1 and which is designed for fitment in stationary manner to a vehicle seat. Once assembled, the body of armrest 1 is movable angularly, about transverse pin 7, between a lowered position - shown in Figure 2 and by the continuous line in Figure 1 - and a raised position shown in Figure 3. In the example shown, the angular travel from the lowered to the raised position is about 125°. The lowered position is determined by contrast between stop section 5 of tubular portion 3 and first locating surface 10 of transverse pin 7, whereas, in the raised position, stop section 4 of tubular portion 3 rests on second locating surface 11 of transverse pin 7.

According to the invention, the angular position of armrest 1 may also be step adjusted finely about the lowered position to adjust the angular position of armrest 1 slightly with respect to a substantially horizontal position, e.g. within a range of about 20°.

For which purpose, provision is made beneath tubular portion 3 for a jack 14 made, for example, of molded plastic material and having a toothed portion 15 which cooperates, as described later on, with toothed sector 12 of transverse pin 7.

Jack 14 is supported by supporting structure 2 in articulated manner about a respective integral transverse pin 16, and is connected at 17 to one end of a flexible-cable transmission 18, the opposite end of which is connected to a manually operated oscillating push-button 19 located at the opposite end of the body of armrest 1 to tubular portion 3. A spring 20 interposed between supporting structure 2 and jack 14 keeps jack 14 in an angular position wherein toothed portion 15 engages toothed sector 12 of transverse pin 7. When push-button 19 is pressed, flexible-cable transmission 18 rotates jack 14, clockwise in Figure 2, about the axis of pin 16 so that toothed portion 15 releases toothed sector 12 to permit angular adjustment of armrest 1 in the lowered position. Once the desired position is achieved, push-button 19 is simply released to restore jack 14, by means of spring 20, to the engaged position in which toothed portion 15 engages toothed sector 12, and so lock armrest 1 in the set position.

According to a further aspect of the invention, supporting structure 2 of armrest 1 defines a receptacle 21 accessible by means of a top cover 22, which is hinged at one end to supporting structure 2 about a transverse pin 23, and is provided at the opposite end with a lock member 24 releasable by means of a spring-operated push-button 25.

Clearly, changes may be made to the construction details and embodiments as described and illustrated herein without, however, departing from the scope of the present invention as defined in the accompanying Claims.

In particular, toothed sector 12 and toothed portion 15 may be replaced by sliding portions cooperating frictionally with each other to provide for continuous angular positioning of the armrest.

## Claims

1. A vehicle seat armrest (1) comprising an elongated body having a supporting structure (2) formed at one end with a transverse, substantially tubular portion (3) mounted for rotation on a transverse pin (7), at least one end (13) of which is fitted in stationary manner to a vehicle seat so that said armrest (1) is movable angularly, about said transverse pin (7), between a lowered position and a raised position; characterized by also comprising a manually controlled device (14, 18, 19) for adjusting the angular position of the armrest (1), with respect to the transverse pin (7), about said lowered position.

2. An armrest as claimed in Claim 1, characterized in that said manually controlled device is a discrete adjusting device for step adjusting the angular position of said armrest.

3. An armrest as claimed in Claim 2, characterized in that said manually controlled device comprises a toothed jack (14) movable between a lock position and a release position; a toothed sector (12); thrust means (20) for normally retaining said toothed jack (14) in said lock position to engage said toothed sector (12); and actuating means (18, 19) for moving said toothed jack (14) from the lock position to the release position in opposition to the action of said thrust means (20).

4. An armrest as claimed in Claim 3, characterized in that said toothed jack (14) is carried by said supporting structure (2).

5. An armrest as claimed in Claim 3 or 4, characterized in that said toothed sector (12) is angularly integral with said transverse pin (7).

6. An armrest as claimed in any one of Claims 2 to 5, characterized in that said actuating means comprise a push-button (19) at the opposite end of the body of the armrest (1) to said substantially tubular portion (3); and a flexible-cable transmission (18) connecting said push-button (19) to said toothed jack (14).

7. An armrest as claimed in any one of the foregoing Claims, characterized in that said supporting structure (2) defines a receptacle (21) accessible by means of an oscillating top cover (22).
